# FASCICULE DE BREVET EUROPEEN

(11) **EP 2 417 367 B1**
(45) Date de publication et mention de la délivrance du brevet: **11.11.2015**
(21) Numéro de dépôt: 10714907.2
(22) Date de dépôt: 01.04.2010
(51) Int. Cl.: F16B 7/18

(54) **NOEUD MÉCANIQUE PERMETTANT DE MAINTENIR PAR SERREMENT TROIS POUTRES DE SECTION RECTANGULAIRE**
MECHANISCHER KNOTEN, DER ZUR BEFESTIGUNG VON DREI TRÄGERN MIT RECHTECKIGEM QUERSCHNITT MITTELS FESTKLEMMEN VERWENDET WERDEN KANN
MECHANICAL NODE THAT CAN BE USED TO SECURE THREE BEAMS OF RECTANGULAR CROSS SECTION BY MEANS OF CLAMPING

(30) Priorité: 06.04.2009 FR 0901657
(43) Date de publication de la demande: 15.02.2012
(73) Titulaire: Viola, Antonio, 75011 Paris (FR)
(72) Inventeur: Viola, Antonio, 75011 Paris (FR)
(74) Mandataire: Hirsch & Associés
(86) Numéro de dépôt international: PCT/FR2010/000280
(87) Numéro de publication internationale: WO 2010/116054

(56) Documents cités:
- DE-U1- 9 314 402
- FR-A5- 2 243 620

## Description

La présente invention concerne un dispositif ou noeud mécanique permettant de maintenir par serrement trois poutres de section rectangulaire dont deux d'entre elles sont parallèles et la troisième est perpendiculaire et passe entre des premières.

Traditionnellement on maintient par serrage des barres tubulaires (notamment pour les échafaudages).

Le dispositif selon la présente invention est, lui, pensé pour assembler dans le minimum d'espace trois poutres de section rectangulaire. Il se présente sous la forme d'un dispositif comportant des plaques qui par leurs parties internes enserrent la troisième poutre et deux pinces qui fonctionnent comme un étau et maintiennent par leurs parties externes les deux autres poutres.

Les pinces sur deux des côtés extérieurs du dispositif bloquent les poutres parallèles et la troisième poutre est encastrée à l'intérieur du dispositif entre les plaques. Les deux pinces se composent d'une partie en forme de L et de clips mobiles qui, une fois unis au L, forment un C. L'ensemble des pinces et des plaques prennent la forme d'un H. Les pièces sont maintenues ensemble par un système de vis. Les plaques et les clips exercent sur les poutres un couple de serrage entraînant frottement et adhérence et s'opposent ainsi au mouvement naturel de translation.

La présente invention a pour objet un dispositif permettant de maintenir par serrement trois poutres de section rectangulaire dont deux d'entre elles A1, A2 sont parallèles et la troisième B est perpendiculaire aux deux autres et passe entre elles, caractérisé en ce qu'il comporte deux plaques qui enserrent par leurs parties internes la troisième poutre B et deux pinces qui se composent chacune d'une partie en forme de L et d'un clip mobile qui fonctionnent comme un étau à l'égard des deux autres poutres A1, A2 perpendiculaires à la poutre B, l'ensemble des pinces et des plaques prenant la forme d'un H grâce à un système de vis maintenant l'ensemble de façon à exercer sur les poutres un couple de serrage entraînant frottement et adhérence.

Selon un mode de réalisation du dispositif de l'invention, chaque pince est composée d'une partie fixe en forme de L comportant une rigole, et d'un clip mobile destiné à s'insérer dans la rigole par glissement, l'ensemble partie fixe et clip étant maintenu par vis, de façon à exercer un couple de serrage autour de la poutre A à laquelle cet ensemble s'applique.

Selon un autre mode de réalisation du dispositif de l'invention, le deux plaques sont reliées par des vis, qui traversent les deux corps 1 en forme de L la fixation des vis générant un couple de serrage autour de la poutre B que ces plaquent enserrent.

Selon encore un mode de réalisation du dispositif de l'invention, les surfaces intérieures du dispositif peuvent être revêtues de « *Téflon »,* de caoutchouc ou de bandes adhésives pour augmenter l'adhésion ou compenser une éventuelle irrégularité des poutres.

Selon un autre mode encore de réalisation du dispositif de l'invention, les pièces qui composent le dispositif peuvent être réalisées par extrusion ou par fusion.

Les dessins annexés illustrent l'invention :

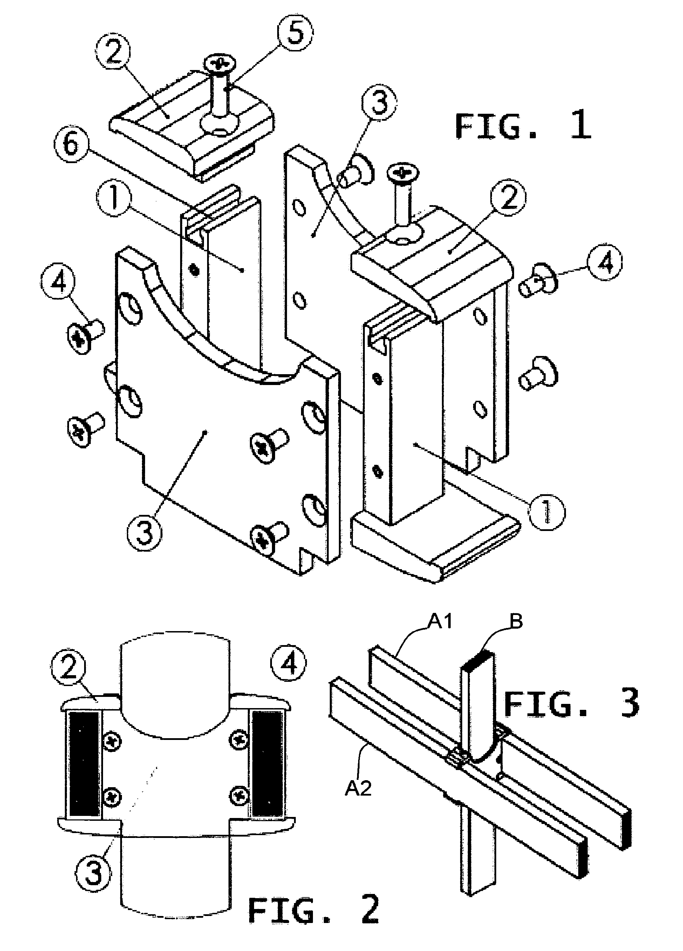

La figure 1 en axonométrie illustre tous les composants du dispositif ainsi que leur assemblage.
La figure 2 en deux dimensions illustre le dispositif fermé.
La figure 3 en axonométrie illustre le dispositif avec les deux poutres et le poteau.

Les figures montrent le dispositif selon la présente invention maintenant par serrement trois poutres de section rectangulaire, dont deux d'entre elles (A1, A2) sont parallèles et la troisième (B) est perpendiculaire aux deux autres et passe entre elles. Le dispositif serre simultanément la poutre B entre les parties internes de deux plaques (3) et deux autres poutres orthogonales A1, A2 à la poutre B, grâce à deux pinces qui fonctionnent comme un étau. Les pinces se composent d'une partie (1) en forme de L et de clips mobiles (2). L'ensemble des pinces et des plaques prennent la forme d'un H par maintien ensemble des pièces par un système de vis (4) (5). Les plaques et les clips exercent sur les poutres un couple de serrage entraînant frottement et adhérence et s'opposant ainsi au mouvement naturel de translation.

Chaque pince est composée d'une partie fixe en forme de L (1) et d'un clip mobile (2), la partie fixe 1 et le clip mobile 2 s'insèrent entre eux par glissement, l'ensemble étant maintenu par la vis (5), qui exerce le couple de serrage autour de la poutre qu'il enserre.

Les deux plaques (3) sont reliées par les vis (4), qui traversent les deux corps à L (1). Le fixage des vis (4) génère un couple de serrage autour de la poutre à laquelle s'appliquent les deux plaques.

Les surfaces intérieures du dispositif peuvent être revêtues de *« Téflon »,* caoutchouc ou bandes adhésives pour augmenter l'adhésion ou compenser une éventuelle irrégularité des poutres.

Les pièces qui composent le dispositif peuvent être réalisées par extrusion ou par fusion. La technique de la fusion permet de réduire le nombre de pièces.

Selon des modes particuliers de réalisation :

Les pièces peuvent être réalisées en aluminium, en acier ou en fibres de carbone.

Les surfaces intérieures du dispositif peuvent être revêtues de *« Téflon »,* caoutchouc ou bandes adhésives pour augmenter l'adhésion ou compenser une éventuellement irrégularité des poutres.

Le dispositif peut serrer des poutres de tous matériaux (aluminium, acier, bois, verre, plexiglass, etc.).

Tous les composants du dispositif sont pensés pour être produits par extrusion. Ces composants sont indépendants et reliés entre eux par le biais de vis. La rigidité du dispositif peut être augmentée en reliant une partie de ses composants par fusion.

Le dispositif trouve son application dans la construction de structures porteuses, dans le design (bibliothèque, table, cuisine, rangement, etc.), paroi intérieure ou dans la réalisation de double peau végétale en façade extérieure (architecture durable).

Le dispositif, produit par extrusion, est composé de deux pinces et deux plaques. Chaque pince est composée d'une partie fixe en forme de L et d'un clip mobile qui s'insère entre elles par glissement dans une rigole. Le clip mobile, maintenu avec une vis, une fois serrée, exerce un couple de serrage autour de la poutre. Les deux plaques sont reliées par 4 vis qui traversent les deux corps à L.

Le fixage des vis génère un couple de serrage autour de la poutre.

Aucun des documents cités dans le rapport de recherche préliminaire ne montre un dispositif permettant de maintenir par serrement trois poutres de section rectangulaire, le dispositif serrant simultanément la première poutre en son intérieur entre deux plaques et deux autres poutres orthogonales à la première, grâce à deux pinces qui fonctionnent comme un étau. Le document D1, FR 2243620 A5 04-04 1975 (Lavoillotte Maurice), fait référence à un dispositif pour la réalisation de rayonnages utilisant un tube rectangulaire avec une face perforée afin de fixer à son antérieur un tasseau support de tablette grâce à des vis de blocage, et une équerre perforée pour la fixation de la tablette. Ce dispositif nécessite deux pièces, tube et équerre, au lieu d'une seule, comme c'est le cas pour le noeud mécanique qui fait l'objet de cette description, et la fixation s'effectue par vis et non pas par serrage. Dans le dispositif D1, les tasseaux et les tablettes sont perforés ainsi que le tube et l'équerre, l'utilisation du noeud mécanique ici en référence, utilise trois poutres intactes, non perforées, ce qui permet le démontage et la réutilisation des poutres pour la construction des nouvelles structures.

Le document D2, DE 9314402 U1 16-12-1993 (Chung Ming Dar), fait référence à un dispositif mécanique pour la réalisation de structures selon trois axes orthogonaux, un tube carré à six faces, douze trous pour le passage de six poutres et six trous pour l'emploi de six vis de blocage. Pour ce dispositif D2, comme D1, la fixation s'effectue par vis et non pas par serrage. Dans le dispositif D2, les poutres sont perforées, ce qui ne permet pas le démontage et la réutilisation des mêmes pour la réalisation des nouvelles structures, comme c'est le cas pour le noeud mécanique ici en référence.

## Revendications

1. Dispositif permettant de maintenir par serrement trois poutres de section rectangulaire dont deux d'entre elles (A1, A2) sont parallèles et la troisième (B) est perpendiculaire aux deux autres et passe entre elles, **caractérisé en ce qu'**il comporte deux plaques (3) qui enserrent par leurs parties internes la troisième poutre (B) et deux pinces qui se composent chacune d'une partie (1) en forme de L et d'un clip mobile (2) qui fonctionnent comme un étau à l'égard des deux autres poutres (A1, A2) perpendiculaires à la troisième poutre (B), l'ensemble des pinces et des plaque prenant la forme d'un H et étant maintenu ensemble par un système de vis (4) (5) de façon à exercer sur les poutres un couple de serrage entraînant frottement et adhérence.

2. Dispositif selon la revendication 1, **caractérisé en ce que** la partie fixe (1) en forme de L comporte une rigole (6), le clip mobile étant destiné à s'insérer dans la rigole (6) par glissement, l'ensemble partie fixe et clip étant maintenu par une vis (5), de façon à exercer un couple de serrage autour de la poutre (A1, A2) à laquelle cet ensemble s'applique.

3. Dispositif selon la revendication 1, **caractérisé en ce que** les deux plaques (3) sont reliées par des vis (4), qui traversent les deux corps (1) en forme de L, la fixation des vis (4) génèrent un couple de serrage autour de la troisième poutre (B) que ces plaquent enserrent.

4. Dispositif selon l'une quelconque des revendications précédentes, **caractérisé en ce que** les surfaces intérieures du dispositif peuvent être revêtues de *« Téflon »,* de caoutchouc ou de bandes adhésives pour augmenter l'adhésion ou compenser une éventuelle irrégularité des poutres.

5. Dispositif selon l'une quelconque des revendications précédentes, **caractérisé en ce que** les pièces qui composent le dispositif peuvent être réalisées par extrusion ou par fusion.

## Patentansprüche

1. Vorrichtung, die es ermöglicht, durch Festklemmen drei Träger mit rechteckigem Querschnitt zu befestigen, wobei zwei von ihnen (A1, A2) parallel sind und der dritte (B) auf die beiden anderen senkrecht ist und zwischen ihnen verläuft, **dadurch gekennzeichnet, dass** sie zwei Platten (3), die mit ihren Innenteilen den dritten Träger (B) festklemmen, und zwei Klammern umfasst, die jeweils aus einem ersten Teil (1) in L-Form und einem beweglichen Clip (2) bestehen, die wie ein Schraubstock gegenüber den beiden anderen Trägern (A1, A2), die auf den dritten Träger (B) senkrecht stehen, funktionieren, wobei die Gesamtheit der Klammern und Platten die Form eines H annehmen und durch ein Schraubensystem (4, 5) zusammengehalten werden, um auf die Träger ein Festklemmmoment auszuüben, das zu einer Reibung und Haftung führt.

2. Vorrichtung nach Anspruch 1, **dadurch gekennzeichnet, dass** der feste Teil (1) in Form eines L eine Rinne (6) umfasst, wobei der bewegliche Clip dazu bestimmt ist, sich in die Rinne (6) durch Gleiten einzufügen, wobei die Einheit fester Teil und Clip durch eine Schraube (5) gehalten wird, um ein Festklemmmoment um den Träger (A1, A2), für den diese Einheit bestimmt ist, auszuüben.

3. Vorrichtung nach Anspruch 1, **dadurch gekennzeichnet, dass** die beiden Platten (3) durch Schrauben (4) verbunden sind, die durch die beiden Körper (1) in L-Form hindurchgehen, wobei die Befestigung der Schrauben (4) ein Festklemmmoment um den dritten Träger (B), die diese Platten festklemmen, erzeugt.

4. Vorrichtung nach einem der vorhergehenden Ansprüche, **dadurch gekennzeichnet, dass** die Innenseiten der Vorrichtung mit *"Teflon",* Kautschuk oder Haftstreifen überzogen sein können, um die Haftung zu erhöhen oder eine mögliche Unregelmäßigkeit der Träger auszugleichen.

5. Vorrichtung nach einem der vorhergehenden Ansprüche, **dadurch gekennzeichnet, dass** die Teile, aus denen die Vorrichtung besteht, durch Extrusion oder Fusion hergestellt sein können.

## Claims

1. Apparatus for use in securing three beams of rectangular cross section by clamping, whereby two of them (A1, A2) are parallel and the third (B) is perpendicular to the other two and passes therebetween, **characterized in that** it comprises two plates (3) which enclose the third beam (B) by means of their internal portions and two clamps which each are formed by an L-shaped portion (1) and a movable clip (2) that function as a vice as regards the two other beams (A1, A2) perpendicular to the third beam (B), the set of clamps and plates adopting the form of an H and being held together by a system of screws (4) (5) so as to exert a clamping torque on the beams, generating friction and grip.

2. Apparatus according to claim 1, **characterized in that** the L-shaped stationary portion (1) has a channel (6), the movable clip (2) being designed for insertion into the channel (6) by sliding, the assembly consisting of stationary portion and clip being held by a screw (5), so as to exert a clamping torque around the beam (A1, A2) to which this assembly is applied.

3. Apparatus according to claim 1, **characterized in that** the two plates (3) are connected by screws (4) which pass through the two L-shaped bodies (1), the securing of the screws (4) generating a clamping torque around the third beam (B) that these plates surround.

4. Apparatus according to any one of the preceding claims, **characterized in that** the inner surfaces of the apparatus can be lined with "Teflon®", rubber or adhesive tape to increase adhesion or compensate any irregularities in the beams.

5. Apparatus according to any one of the preceding claims, **characterized in that** the parts making up the apparatus can be made by extrusion or by casting.
